# EUROPÄISCHE PATENTANMELDUNG

(11) **EP 0 801 970 A1**
(43) Veröffentlichungstag der Anmeldung: **22.10.1997**
(21) Anmeldenummer: 96116130.4
(22) Anmeldetag: 09.10.1996
(51) Int. Cl.: B01D 53/18, B01D 53/78, B08B 15/02, B65D 1/00

(54) **Waschflüssigkeitskreislauf**

(30) Priorität: 16.04.1996 DE 29606880 U
(71) Anmelder: KT KUNSTSTOFFTECHNIK GMBH, D-53840 Troisdorf (DE)
(72) Erfinder: Schmidt, Heinz, 61267 Neu-Anspach (DE)
(74) Vertreter: Stachow, E.-W., Prof. Dr.

(57) **Zusammenfassung**

Bei einem Waschflüssigkeitskreislauf für Anlagen zur Auswaschung von Schadstoffen aus einem Abgasstrom, mit einem Sicherheitsbehälter (1), einem in diesen eingestellten Kreislaufbehälter (2) für die Waschflüssigkeit, an den der Vorlauf (3) und Rücklauf (4) der Waschstrecke (5) anschließbar sind, und einer Pumpe (6) zur Umwälzung der Waschflüssigkeit ist zur Verbesserung der Sicherheitseigenschaften sowie Wartungs- und Bedienfreundlichkeit vorgesehen, daß der Sicherheitsbehälter (1) als nahtlose im Tiefziehverfahren hergestellte Kunststoffwanne ausgebildet ist, die auf einem Untergestell (7) aus Stahl aufgestellt ist, der Kreislaufbehälter (2) ebenfalls als nahtloser im Tiefziehverfahren hergestellter Kunststoffbehälter ausgebildet ist und als Pumpe (6) zur Umwälzung der Waschflüssigkeit eine in den Kreislaufbehälter (2) eingesetzte Tauchpumpe vorgesehen ist.

## Beschreibung

Die Erfindung betrifft einen Waschflüssigkeitskreislauf für Anlagen zur Auswaschung von Schadstoffen aus einem Abgasstrom, mit einem Sicherheitsbehälter, einem in diesen eingestellten Kreislaufbehälter für die Waschflüssigkeit, an dem der Vorlauf und Rücklauf der Waschstrecke anschließbar sind, und einer Pumpe zur Umwälzung der Waschflüssigkeit.

Derartige Waschflüssigkeitskreisläufe sind zum Beispiel als integrierte Einrichtungen zur Neutralisation von umweltschädlichen Gasen und Reaktionsprodukten bekannt, die bei chemischen und physikalischen Verfahren in der Halbleiterfertigung eingesetzt werden oder prozeßbedingt entstehen. Hierbei besteht die Aufgabe des Kreislaufes im wesentlichen darin, permanent eine bestimmte Menge Waschflüssigkeit in einem vorgegebenen pH-Wert und bei einer ebenfalls vorgegebenen und nicht zu überschreitenden Temperatur bereitzustellen. Die Waschflüssigkeit wird durch die Umwälzpumpe und über den Vorlauf der Waschstrecke in der Einrichtung zugeführt, in der ein Verbrennen und Auswaschen des der Einrichtung zugeführten Abgases stattfindet. Dabei werden feste oder gasförmige Verbrennungsprodukte von der Waschflüssigkeit ab- bzw. adsorbiert. Das Ab- bzw. Adsorbens läuft dann in freiem Gefälle aus der Einrichtung in den Kreislaufbehälter zurück.

Durch das Verbrennen der Abgase in der Einrichtung erwärmt sich die umzupumpende Waschflüssigkeit. Um diese unterhalb der vorgegebenen maximalen Temperatur zu halten, ist in den Waschflüssigkeitskreislauf eine Kühlung mit Temperaturüberwachung integriert. Der pH-Wert der Waschflüssigkeit wird bei Abscheidung saurer Medien durch Nachdosieren von Laugen, z.B. KOH oder NaOH, und bei Abscheidung alkalischer Medien durch Nachdosieren von Säuren, z.B. H₂SO₄, auf dem vorgegebenen Wert gehalten. Dazu ist eine Vorlage zur Speicherung einer ausreichenden Menge von KOH oder NaOH bzw. H₂SO₄ vorgesehen.

Bei Anlagen zur Auswaschung von Schadstoffen aus einem Abgasstrom ist es schon bekannt, den Waschflüssigkeitskreislauf als Einbaugerät zu integrieren, so daß es als gesonderte Baueinheit der Wartung und Bedienung der betreffenden Funktionen zugänglich und nach den erforderlichen Sicherheitsansprüchen ausgelegt ist.

Bei Waschflüssigkeitskreisläufen der genannten Art besteht der Sicherheitsbehälter aus einem in Schweißkonstruktion hergestellten Kunststoffbehälter, der mit Rollen versehen ist und somit für das Einbaugerät auch das fahrbare Unterteil bildet. Hierbei hat es sich als nachteilig herausgestellt, daß es durch das Verfahren des Gerätes und dabei hervorgerufene Erschütterungen und andere Umstände zu Undichtigkeiten im Bereich der Schweißnähte kommen kann.

Der Kreislaufbehälter des bekannten Geräts besteht ebenfalls aus einem in Schweißkonstruktion hergestellten Kunststoffbehälter. Dieser Behälter wird teilweise zur Aufnahme kleinerer Bauteile, wie Ventile und Rohrleitungssysteme, benutzt. Die größeren Bauteile, wie die Pumpe zur Waschflüssigkeitsumwälzung, der Kühler sowie eine Pumpe zur Abführung der verbrauchten Waschflüssigkeit aus dem Kreislaufbehälter, sind jedoch in dem Sicherheitsbehälter untergebracht und somit schwer zugänglich, da verschiedene Bauteile übereinander angeordnet werden müssen. Wartungsarbeiten an den Bauteilen werden dadurch erschwert.

Die Umwälzung der Waschflüssigkeit erfolgt bei dem bekannten Gerät durch eine Horizontal-Kreiselpumpe. Eine derartige Pumpe ist aufgrund ihrer Konstruktion und der verwendeten Gleitringdichtung nicht trockenlaufsicher und erhöht ebenfalls den Wartungsaufwand.

Der Erfindung liegt daher die Aufgabe zugrunde, einen Waschflüssigkeitskreislauf der eingangs genannten Art dahingehend zu verbessern, daß eine äußerst kompakte Bauweise mit verbesserten Sicherheitseigenschaften sowie eine optimale Wartungs- und Bedienfreundlichkeit erzielt werden.

Die Aufgabe wird erfindungsgemäß dadurch gelöst, daß der Sicherheitsbehälter als nahtlose im Tief ziehverfahren hergestellte Kunststoffwanne ausgebildet ist, die auf einem Untergestell aus Stahl aufgestellt ist, der Kreislaufbehälter ebenfalls als nahtloser im Tiefziehverfahren hergestellter Kunststoffbehälter ausgebildet ist und als Pumpe zur Umwälzung der Waschflüssigkeit eine in den Kreislaufbehälter eingesetzte Tauchpumpe vorgesehen ist.

Gemäß der vorgeschlagenen Konstruktion kann es bei Erschütterungen durch Verfahren des Gerätes und andere Umstände nicht mehr zu Undichtigkeiten des Sicherheitsbehälters kommen. Ebenso ist der Kreislaufbehälter so stabil, daß er in der Lage ist, alle notwendigen Bauteile, auch die größeren, wie die Umwälzpumpe und eine Pumpe zur Abführung der verbrauchten Waschflüssigkeit usw., zu tragen. Hierdurch ist eine leichte Zugänglichkeit aller wartungsbedürftigen Bauteile gegeben. Darüber hinaus ist es möglich, die gesamte Einheit, bestehend aus dem Kreislaufbehälter und den von diesem getragenen Bauteilen, aus dem Sicherheitsbehälter zu entnehmen und somit noch leichter zu warten und zu reinigen. Da eine Tauchpumpe als trockenlaufsichere Vertikal-Pumpe eingesetzt wird, ergibt sich daraus ebenfalls ein erheblicher Fortschritt in bezug auf die Wartungs- und Bedienungsfreundlichkeit.

Vorzugsweise besteht der Sicherheitsbehälter aus PVC und der Kreislaufbehälter aus PP, welche Materialien als solche schon bei den bisher bekannten Behältern eingesetzt wurden. Wie schon als vorteilhafte Möglichkeit erwähnt, bildet der Kreislaufbehälter das tragende Element für alle notwendigen Bauteile, wie Pumpen, Armaturen, pneumatische und Magnetventile, Meßsonden, Niveauüberwachung usw.

Zweckmäßigerweise sind an dem Untergestell für den Sicherheitsbehälter Rollen zum Verfahren des eine Baueinheit bildenden Kreislaufs angeordnet.

In einer bevorzugten Weiterbildung der Erfindung sind die an den Kreislauf angeschlossenen Schlauchverbindungen und elektrischen Leitungen mit Steckverbindungen bzw. Schnellkupplungen zum einfachen Lösen dieser Verbindungen ausgerüstet. Der bisher bekannte Kreislauf war über beidseitig befestigte Schlauchverbindungen und feste elektrische Leitungen mit der Anlage zum Verbrennen und Auswaschen der zu neutralisierenden Schadstoffe des Abgasstroms verbunden. Die Schlauchverbindungen ließen es zu, daß der Kreislauf aus dem Gesamtgerät herausgezogen werden konnte, jedoch nur soweit es die Schlauch- bzw. Leitungslängen zuließen. Aus Platzgründen konnten diese Schläuche und Leitungen nur relativ kurz gehalten werden, so daß ein komplettes Herausfahren des Kreislaufes aus dem Gesamtgerät ohne Lösen der Schlauch- bzw. Leitungsverbindungen nicht möglich war. Aufgrund der beim erfindungsgemäßen Kreislauf vorgesehenen Steckverbindungen bzw. Schnellkupplungen ist es nunmehr möglich, den Kreislauf innerhalb kürzester Zeit vollkommen vom übrigen Gerät zu trennen und zum Beispiel bei Reparatur- und Wartungsarbeiten durch einen Reservekreislauf zu ersetzen, ohne daß hierdurch größere Stillstandszeiten der Gesamtanlage hervorgerufen werden.

Ein Ausführungsbeispiel der Erfindung wird im folgenden anhand der Zeichnung näher beschrieben.

Es zeigen:
- Fig. 1: eine schematische Darstellung eines Waschflüssigkeitskreislaufs,
- Fig. 2: eine ebenfalls schematische perspektivische Ansicht des eine Baueinheit bildenden Kreislaufs und
- Fig. 3: links untereinander angeordnet eine Seitenansicht und rechts untereinander angeordnet eine Vorderansicht des Kreislaufbehälters, Sicherheitsbehälters und Untergestell des Kreislaufs.

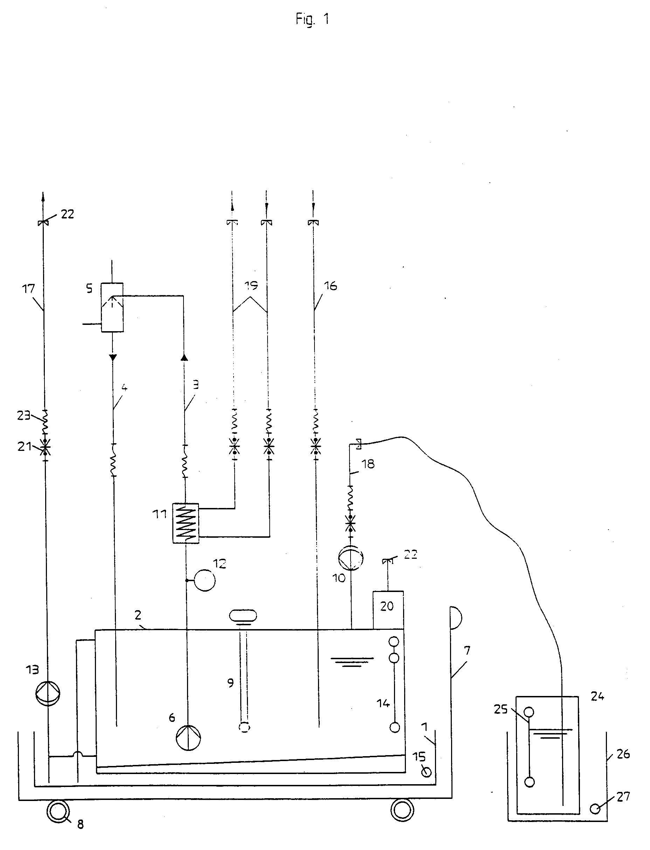

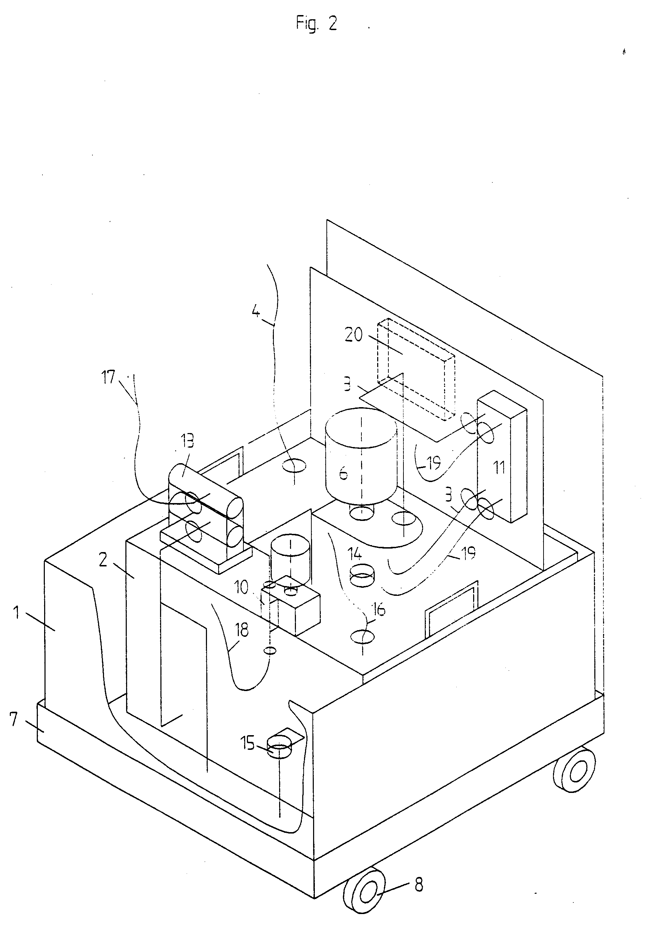

Der in den Figuren 1 und 2 dargestellte Waschflüssigkeitskreislauf ist als Kompaktgerät zur Neutralisation von Schadstoffen, die in der Mikroelektronikindustrie anfallen, ausgelegt und als selbständige Baueinheit in einer (in der Zeichnung nicht dargestellten) Anlage zum Verbrennen und Auswaschen des diese Schadstoffe enthaltenden Abgasstroms integriert. Die Kreislauf-Baueinheit ist innerhalb einer solchen Anlage, die in Form eines Schrankes ausgebildet sein kann, in deren unterem Bereich angeordnet, so daß sie aus dem Schrank zu Wartungs- und Reparaturarbeiten herausgezogen werden kann.

Der Waschflüssigkeitskreislauf kann jedoch auch in anderen Industriezweigen, in denen Anlagen unter Vakuum arbeiten, eingesetzt werden, so z.B. in der chemischen, pharmazeutischen und metallurgischen Industrie, z.B. auch in Beschichtungs- und Aufdampfungsanlagen, bei denen Metalle oder andere Stoffe im Vakuum auf Trägermaterialien aufgedampft werden. In vielen Einsatzfällen ist die Gesamtanlage nicht schrankförmig ausgebildet; z.B. kann der Kreislauf bei der Entsorgung von Vakuumpumpen ein integrierter Bestandteil derselben sein, die zu diesem Zweck aufgeständert werden.

Wie in Fig. 1 dargestellt ist, besteht der Waschflüssigkeitskreislauf im wesentlichen aus einem Sicherheitsbehälter 1, einem in diesen eingestellten Kreislaufbehälter 2 für die Waschflüssigkeit, an den der Vorlauf 3 und Rücklauf 4 der Waschstrecke 5 angeschlossen sind, und einer Pumpe 6 zur Umwälzung der Waschflüssigkeit.

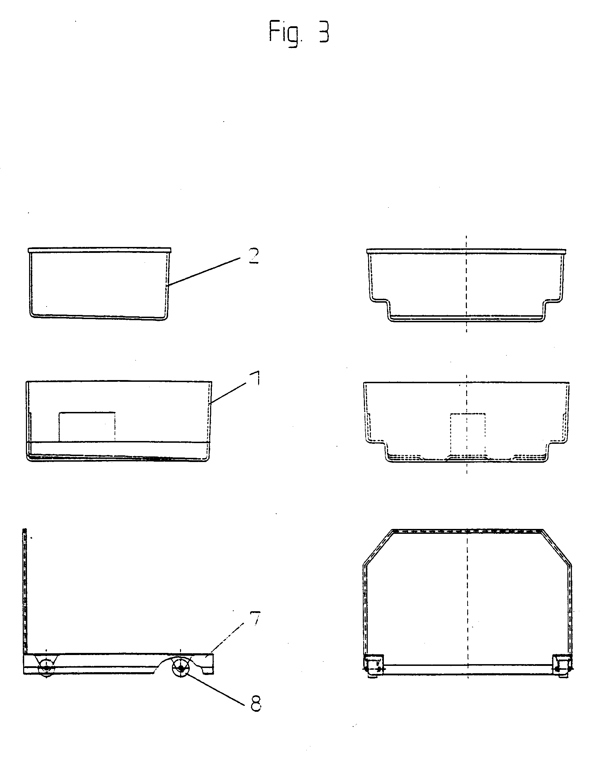

Der Sicherheitsbehälter 1 ist als nahtlose im Tief ziehverfahren hergestellte PVC-Wanne ausgebildet, die auf einem Untergestell 7 aus rostfreiem Edelstahl als tragendem Element zur Aufstellung kommt. Der Kreislaufbehälter 2 besteht ebenfalls aus einem nahtlosen im Tiefziehverfahren hergestellten PP-Behälter. Die zur Umwälzung der Waschflüssigkeit dienende Pumpe 6 ist als Tauchpumpe ausgebildet, die in den Kreislaufbehälter 2 eingesetzt ist. Der Kreislaufbehälter 2 und der Sicherheitsbehälter 1 sind näher in Fig. 3 dargestellt.

Wie in Fig. 2 gezeigt ist, bildet der Kreislaufbehälter 2 das tragende Element für alle notwendigen Bauteile, insbesondere Pumpen, Armaturen, pneumatische und Magnetventile, Meßsonden, Niveauüberwachung, wie sie im folgenden noch näher beschrieben werden.

Der Sicherheitsbehälter 1 mit dem darin eingesetzten Kreislaufbehälter 2 und den daran angeordneten Bauteilen bildet einen Wagen, in dem am Untergestell 7 Rollen 8 zum Heraus- bzw. Hineinfahren des Kreislaufs in den unteren Bereich der schrankförmigen Gesamtanlage angeordnet sind. Das fahrbare Untergestell ist näher in Fig. 3 dargestellt.

Um die an den Kreislauf angeschlossenen Schlauchverbindungen und elektrischen Leitungen problemlos abtrennen zu können, sind Steckverbindungen bzw. Schnellkupplungen vorgesehen. Alle Verbindungen zwischen dem Kreislauf und der übrigen Anlage sind flexibel ausgebildet, so daß der Kreislauf aus der schrankförmigen Anlage herausgefahren werden kann, um eine umfassende Funktionskontrolle durchzuführen. Aufgrund der einfachen Lösung dieser Verbindungen können Wartungs- bzw. Instandsetzungsarbeiten auch außerhalb der Anlage, zum Beispiel in einer Werkstatt, vorgenommen werden.

Weitere, aus den Fig. 1 und 2 hervorgehende wichtige Bauteile des Kreislaufs sind folgende:

Da es die Aufgabe des Kreislaufs ist, eine genügend große Neutralisationsvorlagemenge bereitzuhalten, die sich in einem vorbestimmten pH-Wert (> pH 7 bei Abscheidung saurer und < pH 7 bei Abscheidung alkalischer Medien) befinden muß, erfolgt eine pH-Wert-Überwachung durch eine Einstabmeßkette 9. Über diese wird eine Dosierpumpe 10 angesteuert, mit der bei Unterschreiten des vorgegebenen pH-Wertes eine Lauge, z.B. KOH, NaOH bzw. bei Überschreiten des vorgegebenen pH-Wertes, oder eine Säure, z.B. H₂SO₄ nachdosiert wird.

Da die umzupumpende Waschflüssigkeit durch den Verbrennungsprozeß in der Waschstrecke 5 erwärmt wird, ist eine in den Kreislauf integrierte Kühlung mit Temperaturüberwachung erforderlich, so daß die Waschflüssigkeit unterhalb einer vorgegebenen maximalen Temperatur gehalten werden kann. Die Kühlung erfolgt in einem äußerst kompakten Wärmetauscher 11 extrem niedrigen Gewichtes mit Kühlwasserkreislauf 19, wobei die Temperaturüberwachung durch einen Temperatur-Reedschalter 12 vorgenommen wird.

Durch das Abscheiden der Schadstoffe bilden sich im Kreislaufbehälter Salze, so daß die Waschflüssigkeit bei Erreichung einer vorgegebenen Aufsalzung durch eine Abwasserleitung 17 abgeführt werden muß. Zur Absalzung, d. h. zum Abpumpen, eines Teils der verbrauchten Waschflüssigkeit ist der Kreislauf mit einer doppeltwirkenden preßluftbetriebenen Membranpumpe 13 ausgerüstet.

Damit sichergestellt ist, daß der Auswaschvorgang in der Anlage auch beim Absalzen eines Teils der Waschflüssigkeit aus dem Kreislaufbehälter nicht unterbrochen wird, erfolgt eine Steuerung zur Erhaltung einer Mindestvorlage von Waschflüssigkeit über eine festeingebaute Niveausonde 14, die zusätzliche Schaltpunkte als Überfüllsicherung aufweist.

Weiterhin ist zur Leckageüberwachung zwischen Sicherheitsbehälter 1 und Kreislaufbehälter 2 eine Leckwarnsonde 15 angeordnet.

Das Ansteuern der einzelnen Funktionen, pH-Überwachung und Absalzvorgang, erfolgt über eine außerhalb des Kreislaufes angeordnete, ebenfalls in die Gesamtanlage integrierte Steuereinheit.

Die Medienversorgung des Kreislaufes erfolgt über einen in die schrankförmige Anlage integrierten Medienversorgungsschacht mit eingebauten Armaturen, unter anderem auch mit Armaturen zur Überwachung von Drücken und Durchflußmengen.

Ferner gehört zu dem Kreislauf, sofern die Medienversorgung nicht über vorhandene Versorgungseinheiten erfolgt, eine Vorlage zur Zuführung frischer Waschflüssigkeit 16 sowie einer ausreichenden Menge Lauge bzw. Säure 18. Die Vorlagebehälter sind mit einer integrierten Niveauüberwachung 25 ausgerüstet, mit einem unteren Schaltpunkt zur Meldung der Unterschreitung einer Sollvorgabemenge und einem oberen Schaltpunkt als Überfüllsicherung. Der Vorlagebehälter 24 für Lauge bzw. Säure besteht ebenfalls aus einem voll korrosionsbeständigen Material und ist ferner in eine Sicherheitswanne 26 mit Leckwarnsonde 27 eingestellt.

Die Zuführung frischer Waschflüssigkeit 16, Abwasserleitung 17, Zuführung von Lauge bzw. Säure 18, der Vorlauf 3 und Rücklauf 4 der Waschstrecke 5, sowie der Vorlauf und Rücklauf des Kühlwasserkreislaufs 19 weisen flexible Schlauchverbindungen 23 und zum problemlosen Abtrennen des Kreislaufs von der übrigen Anlage Schnellkupplungen 21 und Schraub- bzw. Steckverbindungen 22 auf. Die elektrische Verbindung zwischen dem Kreislauf und der übrigen Anlage erfolgt über einen Klemmkasten und eine daran angeschlossene Steckverbindung 22. Die den Klemmkasten und die Druckluftversorgung für die Vorsteuerventile umfassende Baueinheit ist in den Fig. 1 und 2 mit dem Bezugszeichen 20 gekennzeichnet. Als zusätzliche Sicherheitsmaßnahme sind alle zu- und abführenden Ver- und Entsorgungsleitungen mit zusätzlichen, (in der Zeichnung nicht dargestellten) von Hand zu betätigenden Absperrarmaturen ausgerüstet.

### Bezugszeichenliste

- 1: Sicherheitsbehälter
- 2: Kreislaufbehälter
- 3: Vorlauf
- 4: Rücklauf
- 5: Waschstrecke
- 6: Pumpe
- 7: Untergestell
- 8: Rolle
- 9: Einstabmeßkette
- 10: Dosierpumpe
- 11: Wärmetauscher
- 12: Temperatur-Reedschalter
- 13: Membranpumpe
- 14: Niveausonde
- 15: Leckwarnsonde
- 16: Zuführung frischer Waschflüssigkeit
- 17: Abwasserleitung
- 18: Zuführung von Lauge bzw. Säure
- 19: Kühlwasserkreislauf
- 20: Klemmkasten und Druckluftversorgung
- 21: Schnellkupplung
- 22: Schraub- bzw. Steckverbindung
- 23: Schlauchverbindung
- 24: Vorlagebehälter für Lauge bzw. Säure
- 25: Niveauüberwachung
- 26: Sicherheitswanne
- 27: Leckwarnsonde

## Patentansprüche

1. Waschflüssigkeitskreislauf für Anlagen zur Auswaschung von Schadstoffen aus einem Abgasstrom, mit einem Sicherheitsbehälter (1), einem in diesen eingestellten Kreislaufbehälter (2) für die Waschflüssigkeit, an den der Vorlauf (3) und Rücklauf (4) der Waschstrecke (5) anschließbar sind, und einer Pumpe (6) zur Umwälzung der Waschflüssigkeit, **dadurch gekennzeichnet,** daß der Sicherheitsbehälter (1) als nahtlose im Tiefziehverfahren hergestellte Kunststoffwanne ausgebildet ist, die auf einem Untergestell (7) aus Stahl aufgestellt ist, der Kreislaufbehälter (2) ebenfalls als nahtloser im Tiefziehverfahren hergestellter Kunststoffbehälter ausgebildet ist und als Pumpe (6) zur Umwälzung der Waschflüssigkeit eine in den Kreislaufbehälter (2) eingesetzte Tauchpumpe vorgesehen ist.

2. Waschflüssigkeitskreislauf nach Anspruch 1, **dadurch gekennzeichnet,** daß der Sicherheitsbehälter (1) aus PVC besteht.

3. Waschflüssigkeitskreislauf nach Anspruch 1 oder 2, **dadurch gekennzeichnet,** daß der Kreislaufbehälter (2) aus PP besteht.

4. Waschflüssigkeitskreislauf nach einem der Ansprüche 1 bis 3, **dadurch gekennzeichnet,** daß der Kreislaufbehälter (2) das tragende Element für alle notwendigen Bauteile, wie Pumpen, Armaturen, pneumatische und Magnetventile, Meßsonden, Niveauüberwachung usw., bildet.

5. Waschflüssigkeitskreislauf nach einem der Ansprüche 1 bis 4, **dadurch gekennzeichnet,** daß an dem Untergestell (7) für den Sicherheitsbehälter (1) Rollen (8) zum Verfahren des eine Baueinheit bildenden Kreislaufs angeordnet sind.

6. Waschflüssigkeitskreislauf nach einem der Ansprüche 1 bis 5, **dadurch gekennzeichnet,** daß die an den Kreislauf angeschlossenen Schlauchverbindungen (23) und elektrischen Leitungen mit Steckverbindungen (22) bzw. Schnellkupplungen (21) zum einfachen Lösen dieser Verbindungen ausgerüstet sind.
